# EUROPEAN PATENT SPECIFICATION

(11) **EP 2 413 158 B1**
(45) Date of publication and mention of the grant of the patent: **03.08.2016**
(21) Application number: 11382216.7
(22) Date of filing: 29.06.2011
(51) Int. Cl.: G01S 13/90

(54) **A method for monitoring terrain and man-made feature displacements using ground-based synthetic aperture radar (GBSAR) data**
Verfahren zur Überwachung von Verschiebungen des Geländes und von durch Menschen geschaffenen Strukturen unter Verwendung der Daten eines bodengestützten Radars mit synthetischer Apertur
Procédé de surveillance de terrain et déplacements de propriétés synthétiques utilisant des données de radar terrestre à ouverture synthétique

(30) Priority: 26.07.2010 ES 201031149
(43) Date of publication of application: 01.02.2012
(73) Proprietor: Fundació Centre Tecnologic de Telecomunicacions de Catalunya, 08860 Castelldefels (Barcelona) (ES)
(72) Inventor: Crosetto, Michele, 08860 Castelldefels (Barcelona) (ES); Monserrat Hernández, Oriol, 08860 Castelldefels (Barcelona) (ES)
(74) Representative: Carpintero Lopez, Francisco

(56) References cited:
- US-A1- 2010 045 513
- NOFERINI L ET AL: "Permanent Scatterers Analysis for Atmospheric Correction in Ground-Based SAR Interferometry", IEEE TRANSACTIONS ON GEOSCIENCE AND REMOTE SENSING, IEEE SERVICE CENTER, PISCATAWAY, NJ, US, vol. 43, no. 7, 1 July 2005 (2005-07-01), pages 1459-1471, XP011135475, ISSN: 0196-2892, DOI: 10.1109/TGRS.2005.848707
- ALESSANDRO FERRETTI ET AL: "Permanent Scatterers in SAR Interferometry", IEEE TRANSACTIONS ON GEOSCIENCE AND REMOTE SENSING, IEEE SERVICE CENTER, PISCATAWAY, NJ, US, vol. 39, no. 1, 1 January 2001 (2001-01-01), XP011021652, ISSN: 0196-2892
- D'ARIA D ET AL: "SAR Calibration Aided by Permanent Scatterers", IEEE TRANSACTIONS ON GEOSCIENCE AND REMOTE SENSING, IEEE SERVICE CENTER, PISCATAWAY, NJ, US, vol. 20, no. 4, 1 April 2010 (2010-04-01), pages 2076-2086, XP011297743, ISSN: 0196-2892
- BIANCARDI P ET AL: "Performances and limitations of Persistent Scatterers-based SAR calibration", RADAR CONFERENCE, 2010 IEEE, IEEE, PISCATAWAY, NJ, USA, 10 May 2010 (2010-05-10), pages 762-766, XP031696637, ISBN: 978-1-4244-5811-0
- MONSERRAT O ET AL: "MONITORIZACION DE DESLIZAMIENTOS DE TERRENO CON SAR TERRESTRE", INTERNET CITATION, 27 October 2009 (2009-10-27), pages 1-10, XP007919552, [retrieved on 2011-10-10]
- ANDREAS JUNGNER: "Ground-Based Synthetic Aperture Radar Data Processing for Deformation Measurement", INTERNET CITATION, 1 May 2009 (2009-05-01), pages 1-66, XP007919554, [retrieved on 2011-10-10]

## Description

### TECHNICAL FIELD OF THE INVENTION

The present invention lies within the technical field of monitoring terrain and man-made feature displacements in areas of interest and, particularly, in the field of monitoring methods which make use of Ground-Based Synthetic Aperture Radar (GBSAR) data.

### BACKGROUND OF THE INVENTION

A Ground-Based Synthetic Aperture Radar (GBSAR) is an active microwave acquisition sensor that provides its own illumination and measures the signal reflected by targets. In this context the targets are typically the terrain, the man-made features and all other features that form part of the observed scene. Providing its own illumination makes day and night data acquisition possible, independently of natural light. The Synthetic Aperture Radar (SAR) is today a relatively mature technique, with numerous operational systems onboard satellites and aircrafts. In the last decade the SAR technique has been implemented on terrestrial or ground-based platforms, offering flexible displacement monitoring tools that can illuminate an area of interest from optimal viewpoint and acquire images with an unmatched temporal frequency.

In contrast to other terrestrial deformation measurement instruments, the GBSAR is an imaging system (i.e. it generates images) allowing to cover, in a continuous way, the observed surface up to extensions of approximately 1 km² from a single measurement position. The GBSAR technique has been used in a wide range of monitoring applications: landslide monitoring, glacier monitoring, avalanche prediction, volcano front monitoring, dams monitoring and subsidence monitoring. The use of this technique for these applications has been described in different papers, see for example Bernardini, G., Pasquale, G., Bicci, A., Marra, M., Coppi, F., and Ricci, P. (2007): "Microwave interferometer for ambient vibration measurement on civil engineering structures: 1. principles of the radar technique and laboratory tests", in Proc. Experimental Vibration Analysis for Civil Engineering Structures (EVACES'07); D. Tarchi, H. Rudolf, G. Luzi, L. Chiarantini, P. Coppo, and A. J. Sieber (1999): "SAR interferometry for structural changes detection: A demonstration test on a dam", in Proc. IGARSS 1999, pp. 1522-1524; M. Pieraccini, D. Tarchi, H. Rudolf, D. Leva, G. Luzi, and C. Atzeni (2000): "Interferometric radar for remote monitoring of building deformations" in Electron. Lett., vol. 36, no. 6, pp. 569-570, Mar. 2000; M. Pieraccini, D. Mecatti, L. Noferini, G. Luzi, G. Franchioni, and C. Atzeni (2002): "SAR interferometry for detecting the effects of earthquakes on buildings" in NDT Int., vol. 35, pp. 615-625, Aug, 2002; D. Leva, G. Nico, D. Tarchi, J. Fortuny, and A. J. Sieber (2003): "Temporal analysis of a landslide by means of a ground-based SAR interferometer", in IEEE Trans. Geosci. Remote Sens., vol. 41, no. 4, pp. 745-752, Apr. 2003; and M. Pieraccini, N. Casagli, G. Luzi, D. Tarchi, D. Mecatti, L. Noferini, and C. Atzeni (2002): "Landslide monitoring by ground-based radar interferometry: A field test in Valdarno (Italy)", in Int. J. Remote Sens., vol. 24, no. 6, pp. 1385-1391, Sep. 2002.

The method usually employed to estimate displacements from GBSAR data has been SAR interferometry which requires two fundamental components. Firstly, it needs a coherent GBSAR sensor, which measures both the phase and amplitude of the SAR signal. Secondly, it needs repeated SAR acquisitions of the same scene over time, starting, at least, from two acquisitions. The eventual displacements of the observed scene between two SAR acquisitions separated in time are derived by computing and analysing the interferometric phase, which is given, pixelwise, by the difference between the SAR phase acquired in the first campaign, minus the SAR phase of the second campaign. The major advantage of this approach is its high sensitivity to small displacements, which can be measured with a precision that is a fraction of the used SAR wavelength. Considering that the GBSAR systems work with wavelengths in the region of 1-5 cm, this implies, for targets that are good scatterers, that sub-millimetre displacement precision can be usually achieved.

The *conditio sine qua non* for using SAR interferometry is that a sufficient number of targets remain coherent over the observation period, which can be of several months or years, especially for very slow deformation phenomena. The first limitation of SAR interferometry is given by the loss of coherence that SAR data may experience over time. This can be particularly severe over vegetated and forested areas, and over scenes that change continuously over time.

A second critical limitation is aliasing. Due to the ambiguous nature of interferometric phase measurements, the displacement undergone by a given scene can only be correctly, say unambiguously, estimated if they satisfy this condition: the relative displacements actually occurring between adjacent coherent targets cause an interferometric phase difference up to half phase cycle. In terms of displacements this condition imposes a very restrictive limit that ranges from about 5 mm in Kuband up to about 15 mm in C-band. From the operational viewpoint the risk of deriving ambiguous displacement estimates represents a very severe limitation of the technique.

A third limitation is related to atmospheric component of the interferometric phase, which is caused by heterogeneities, at the time of SAR image acquisitions, in the atmosphere between sensor and target. The atmospheric component may degrade the quality of the displacement estimation. In the worst cases, when strong atmospheric signals are associated with spatially sparse coherent targets, it may affect the phase ambiguity estimation.

Finally, a fourth limitation is due to the mono-dimensional nature of the GBSAR interferometric measurements, which are along the Line-Of-Sight (LOS) of the radar. Out of the three possible components of a generic 3D displacement, GBSAR interferometry can only provide one component of displacement, the LOS component.

In L. Noferini et al.: "Permanent Scatterers Analysis for Atmospheric Correction in Ground-Based SAR Interferometry", IEEE Transactions on Geoscience and Remote Sensing, Vol. 43, N° 7, pp. 1459-1471, permanent scatterers are used to crrect for atmospheric influence in ground based interferometric SAR. This document concludes that spatial baseline changes may be ignored.

In US2010/045513 a ground based interferometric SAR with multiple baselines and reference reflectors as permanent scatterers is disclosed. The permanent scatterers serve in the context of an error map generation.

### DESCRIPTION OF THE INVENTION

The present invention is intended to provide improvements with respect to the aforementioned limitations of prior art by providing a method for monitoring terrain and man-made feature displacements using ground-based synthetic aperture radar data. The method comprises estimating displacements of targets located in an area of interest that have taken place between a first campaign and at least a subsequent campaign by means of a comparison of a first set of GBSAR image data acquired in the first campaign in the area of interest with a subsequent set of GBSAR image data acquired in the subsequent campaign, said SAR image data originating from complex SAR images respectively obtained in said campaigns by means of a GBSAR instrument placed in a position in accordance with sensor parameters comprising the position and the orientation of the GBSAR instrument and illuminating said area of interest and a plurality of targets present in said area of interest, the method further comprising
subjecting a first set of quality-proofed complex SAR images originating from a first set of complex SAR images acquired in said first campaign, to data pre-processing by incoherent temporal averaging to obtain a first incoherent mean SAR image, and subjecting a second set of quality-proofed complex SAR images originating from a second set of complex SAR images acquired in said subsequent campaign to data pre-processing by incoherent temporal averaging to obtain a second incoherent mean SAR image, said complex SAR images defining a SAR image space corresponding to an object space in the area of interest;
selecting, in the first incoherent mean SAR image, first pixels which are representative of said targets in said first set of SAR image data acquired in the first campaign, and selecting, in the second incoherent mean SAR image, second pixels which are representative of said targets in said second set of SAR image data acquired in the second campaign, said targets being selected from artificial corner reflectors, if they are deployed in the area of interest, and natural reflectors, such as exposed rocks, man-made structures, metallic structures and combinations thereof, in the area of interest;
performing a global image matching, preferredly on the amplitude of the selected pixels, over the selected pixels to obtain a set of pairs of global shifts expressed in pixels and being representative of one image shift needed to match a given pixel of said first pixels with a homologous pixel of said second pixels, and selecting a plurality of quality-scored pairs of global shifts among the pairs of global shifts, by applying a matching score that measures the matching quality of the incoherent mean SAR images, such as the cross-relation coefficient or the sigma nought of least squares matching;
estimating GBSAR repositioning effects due to differences between the position and orientation of the GBSAR instrument in said first campaign and in said second campaign, by obtaining a mask comprising stable-area pixels corresponding to stable areas in the area of interest, computing a subset of global shifts falling in the mask, estimating a co-registration transformation of said subsets of global shifts, and thus producing a set of co-registration parameters modelling the GBSAR repositioning effects;
estimating pairs of displacements for said first and said subsequent campaign by subtracting the GBSAR repositioning effects modelled by the co-registration parameters from the set of pairs of global shifts, thereby obtaining a plurality of pairs of displacements shifts expressed in pixels which are relative displacements with respect to the whole of the stable-area pixels, converting the displacement shifts expressed in pixels into displacements expressed in a displacement unit, and obtaining a set of pairs of estimated displacements defined in an object space by geocoding involving an image-to-object transformation.

In an embodiment of the invention, the method also comprises an estimation of a displacement time series by obtaining a set of pairs of estimated displacements for each pair of campaigns to be analyzed, and identifying a common set of estimated displacements by carrying out an intersection of all sets of estimated displacements, thereby obtaining a subset of estimated displacements for each pair of campaigns. The displacement time series can then be obtained by direct integration of the subsets of estimated displacement and defining the displacement time series in an object space, or by means of a least square estimation procedure, rejecting outliers in the subset of pairs of estimated displacements, and then defining the displacement time series in an object space. In this latter case, the estimation of the displacement time series can be carried out iteratively.

In accordance with the invention, the quality-proofed complex SAR images are obtained by subjecting each complex SAR image to a quality check and discarding images with problems.

The mask comprising stable-area pixels may be obtained by collecting external information on the stable areas in an object space corresponding to said SAR image space, and mapping said external information in the SAR image space in pixels taking into account said sensor parameters.

The present invention offers remarkable advantages with respect to the standard GBSAR interferometric approach.

Using amplitude image matching techniques on GBSAR imagery offers these advantages:
- It provides non-ambiguous, aliasing-free, displacement estimates. This is the most important advantage of the proposed procedure.
- The displacement estimates are not affected by the above described atmospheric effects.
- It provides 2D displacement measurements, in range and in the cross-range directions, which represent an improvement with respect to the LOS estimates coming from GBSAR interferometry. It is worth emphasising that the performances of the 2D estimations depend on the geometric characteristics of the used GBSAR imagery. In general worse performances are expected in the cross-range direction, especially in the middle and far range of images, where spatial resolution is degraded.

In addition, by employing corner reflectors (CRs) one gets two additional fundamental advantages:
- Precise and reliable displacement estimates can be achieved. It is important to note that here we estimate the displacements over single targets, while usually SAR amplitude matching is usually employed for co-registration purposes, where hundreds of points are used to estimate a limited set of parameters (usually less than 10 for the entire image). Here we need to rely on the two displacements (i.e. the two shifts) per each measured target: in this context CRs are fundamental.
- Finally the CRs guarantee the possibility to measure the same targets over time. This is the same advantage that is achieved by using CRs in GBSAR interferometry.

### BRIEF DESCRIPTION OF THE DRAWINGS

Hereinafter, aspects and embodiments of the invention will be described on the grounds of drawings wherein
figure 1 is a block diagram of an embodiment of the method according to the present invention;
figure 2 is a block diagram of a data acquisition step used in the method of the present invention;
figure 3 is a block diagram of a data pre-processing step used in the method of the present invention;
figure 4 is a block diagram of a global matching step used in the method of the present invention;
figure 5 is a block diagram of a step for the estimation of GBSAR repositioning effect used in the method of the present invention;
figure 6 is a block diagram of a displacement estimation step used in the method of the present invention;
figure 7 is a block diagram of a displacement time series estimation step used in the method of the present invention;
figure 8 is an image of a landslide corresponding to an area of interest (Aol) to which a practical embodiment of the method was applied;
figure 9 is an image of one of the corner reflectors (CR) used in said practical embodiment;
figure 10 shows the amplitudes of two incoherent mean SAR images obtained in said practical embodiment;
figure 11 is a visualization of the displacements measures in the range direction in said embodiment.

### EMBODIMENTS OF THE INVENTION

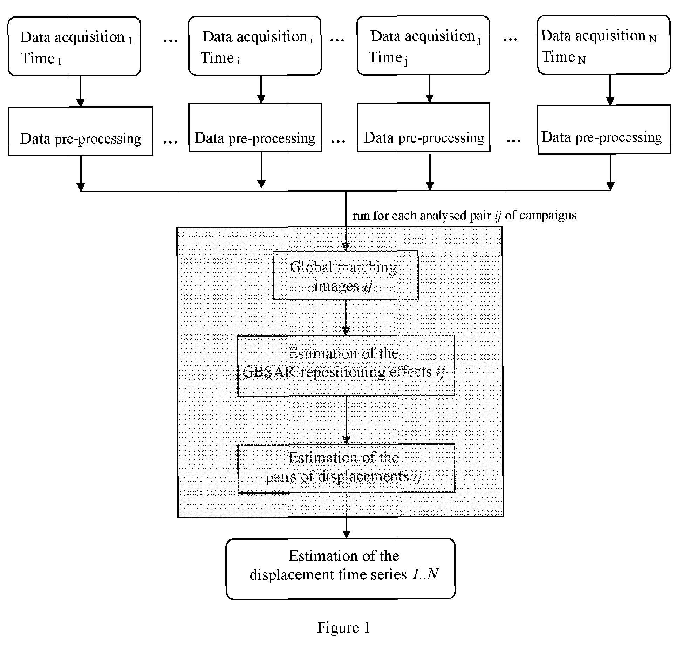

Figure 1 shows an embodiment of the method of the present invention. As apparent, in this embodiment, the method comprised the following main steps:
a data acquisition step, repeated up to N times, where N is the total number of campaigns;
a data pre-processing step, repeated up to N times, one time for each campaign;
a global matching step, run for each analysed pair *ij* of campaigns;
a step for the estimation of the GBSAR-repositioning effects, run for each analysed pair *ij* of campaigns;
a step for the estimation of the pairs of displacements, run for each analysed pair *ij* of campaigns; and
a step for the estimation of the displacement time series, run once for all campaigns.

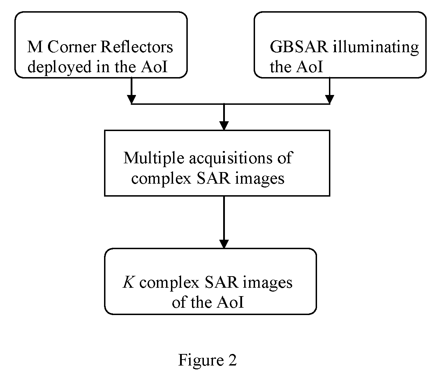

As shown in figure 2, in the data acquisition step data are obtained by means of N in-situ campaigns. Each campaign involves installing a GBSAR instrument in a position to fully illuminate the area of interest (Aol). Usually the GBSAR positioning (and re-positioning in the following campaigns) is performed in a relatively light fashion, e.g. without building a stable concrete base. This eases the data acquisition procedure, and deploying a set of M CRs in the Aol. Thereafter, K complex SAR images are acquired by illuminating the Aol by the GBSAR instrument.

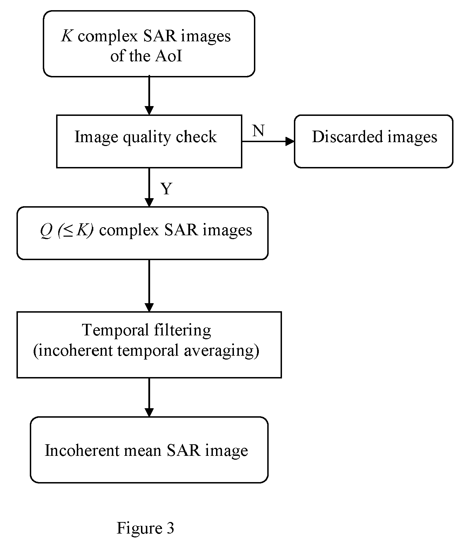

According to figure 3, the data pre-processing step is performed on each set of K complex SAR images acquired in a campaign, and hence is repeated up to *N* times. The data pre-processing involves a check of the quality of each acquired complex SAR image, with the objective of detecting and eventually discarding images with problems, e.g. corrupted files, very noisy images, images characterised by blurred amplitude values, etc. Then, on the sub-set of quality-proofed images, which includes *Q* ≤ *K* images, a temporal filtering is performed. The goal of the filtering is the enhancement of the SAR amplitude images (a sub-product of the complex SAR images) by strongly reducing the so-called speckle effect. This is achieved through an incoherent temporal averaging of the *Q* images. The result of this is an incoherently averaged SAR image.

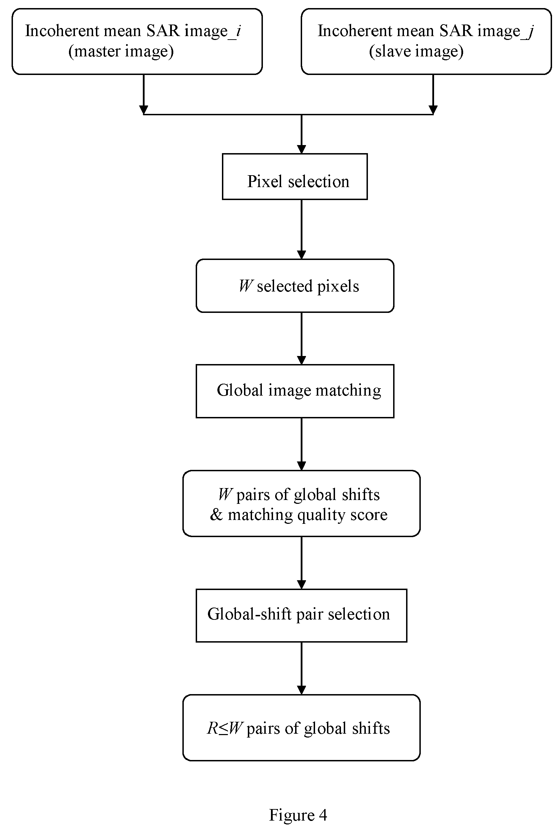

In the global matching step shown in figure 4, global matching is performed on each analysed pair *ij* of campaigns. Given *N* campaigns, the minimum number of global matchings is *N*-*1*, e.g. by performing the temporal sequence *12*, 23, ..., *ij,* ..., (*N-1*)*N*, or any other combination. Global matching involves getting, as input, a pair of incoherently averaged SAR images, say image_*i* and image_*j*. The first image may also be referred to as the master image, while the second one may be called slave image. Thereafter, pixel selection is carried out, whose goal is identifying those pixels of the two images that can be exploited for image matching purposes, discarding the other ones. The pixels to be selected include those associated with the M deployed CRs, and others related to "natural reflectors", like exposed rocks, buildings, man-made structures, metallic structures, etc. Different procedures can be used for this purpose, which usually are based on the amplitude images derived from the input images, or on other statistics. An effective selection can be achieved by selecting all pixels whose amplitude value is above a given threshold. Then, the global image matching is preformed over the set of pixels selected in the previous step. Several algorithms can be used for this purpose. It is suggested to work only on the amplitude of the complex SAR images and to use matching procedures as precise as possible, due to the direct impact of the matching quality on the final displacement estimates. A further selection is then performed on the outcome of the global matching, i.e. W pairs of global shifts (expressed in pixels). Each pair containing one image shift (the shift needed to match a given slave pixel with its homologous on the master image) for each of the two main directions of the SAR images: the range direction, and the cross-range or azimuth direction. The selection is performed on a score that measures the quality of the matching, which is usually related to the used image matching procedure. Examples of these scores can be the cross-correlation coefficient, the sigma nought in case of least squares (LS) matching or other indicators of the slave to master goodness-of-fit. The result of global matching is a selected set of *R≤W* pairs of global shifts.

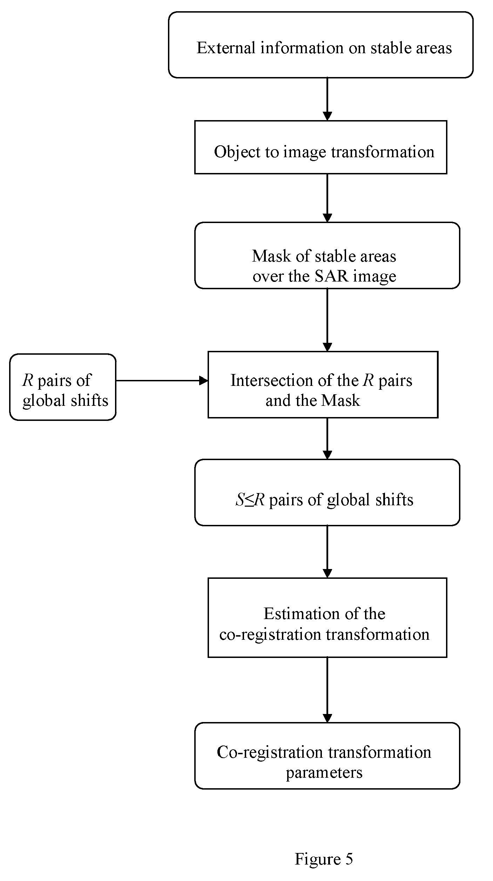

After global matching, the step for estimation of GBSAR repositioning effects shown in figure 5 is performed. Estimation of the GBSAR-repositioning effects, like the global matching, is performed on each analysed pair *ij* of campaigns. These effects are due to the fact that there are usually slight changes in the position and orientation of the GBSAR between different campaigns. The estimation of these effects involves first collecting external information on the stable areas located in the vicinity of the deformation Aol. This information is usually available if the deformation mechanism and the key characteristics of the deformation phenomenon at hand are known. In case this information is not available, one alternative way to get it is by analysing the set of *R* pairs of global shifts estimated in the previous step. If the information of the stable areas is known in the so-called object space, say a cartographic or geographic reference system, it has to be properly mapped in the SAR image space to be exploited. This operation, which requires as input the position and orientation of the GBSAR, is the inverse of the geocoding operation mentioned later in this document. The output of this operation is a mask that identifies all stable areas in the SAR image space. By using the aforementioned mask, a subset of the *R* pairs of global shifts is computed, which is given by the *S*≤*R* global shifts that fall in the stable area mask.

The S global shifts are used to estimate the so-called co-registration transformation, i.e. the slave to master transformation which is due to the GBSAR-repositioning effects. The complexity of the transformation mainly depends on the topography of the Aol and the distance Aol to the sensor. The inventors' experience suggests that, excluding very close-range scenarios, e.g. less than 50-100 m, and strong topographic variations, affine transformation, or any equivalent transformation, is sufficient for this purpose.

The final result of this step is a set of transformation parameters modelling the GBSAR-repositioning effects and used to perform the slave to master co-registration. For sake of completeness it should be mentioned that co-registration transformation parameters could be directly estimated by measuring accurately and in each campaign the position and orientation of the GBSAR.

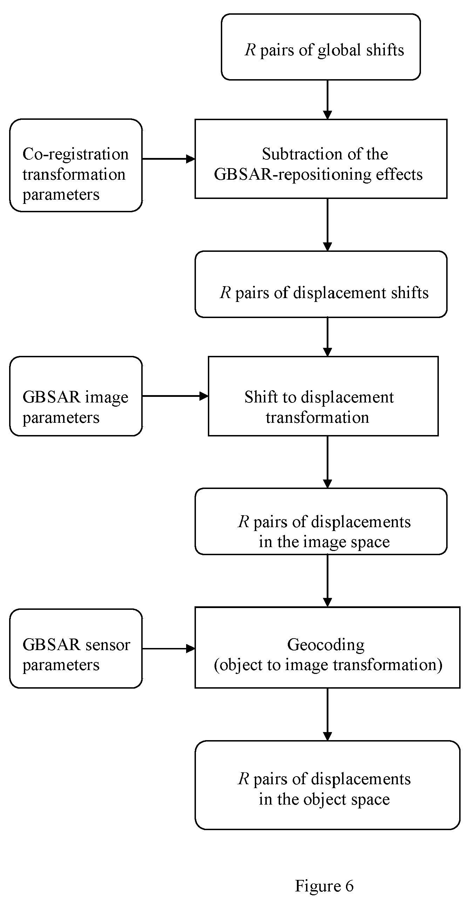

The estimation of the pairs of displacement as shown in figure 6 is performed on each analysed pair *ij* of campaigns. It involves, first subtracting the GBSAR-repositioning effects, which are modelled by the co-registration transformation parameters, from the set of *R* pairs of global shifts. This results in *R* pairs of displacement shifts, where the displacements are relative displacements with respect to the whole set of stable areas mentioned above. As mentioned above, the *R* pairs of displacement shifts include those shift associated with the *M* deployed CRs and others related to "natural reflectors" located in the Aol.

Taking into account the GBSAR image parameters, the above displacement shifts which were so far expressed in pixels, are transformed in values of physical displacements, choosing an appropriate displacement unit, typically mm, cm or m. It is worth noting that in this step the displacements are still defined in the image space, which usually coincides with the SAR master image. Finally, considering the GBSAR sensor parameters (GBSAR position, orientation, etc.), image geocoding is performed. This involves an image-to-object transformation. The final result is a set of *R* pairs of estimated displacements defined in the object space, say in a cartographic or geographic coordinate reference system.

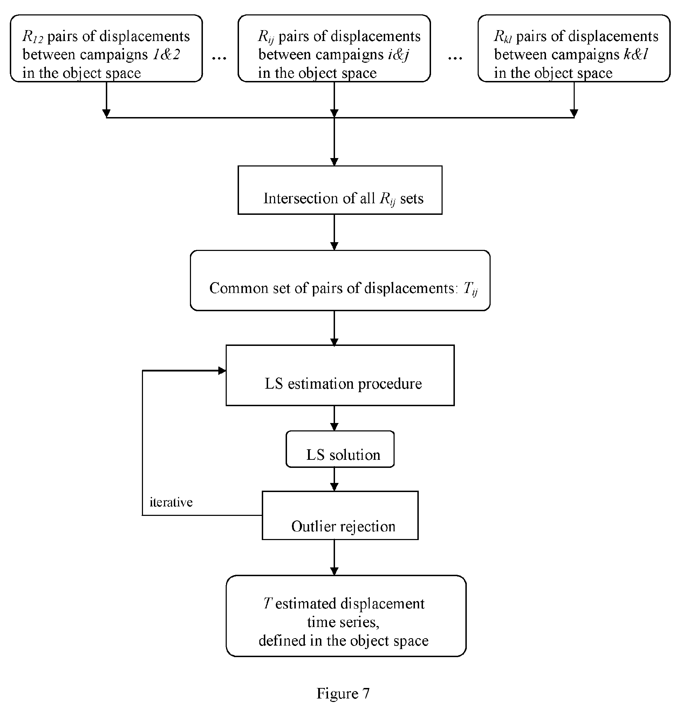

The estimation of the displacement time series shown in figure 7 has to be run once for all campaigns, to get the main product of the whole procedure, i.e. the estimated displacement time series. It involves getting, for each analysed pair *ij* of campaigns, a set of *Rᵢⱼ* pairs of estimated displacements defined in the object space. Note that the sets *Rᵢⱼ* are usually different. For this reason, the common set has to be identified by getting the intersection of all *Rᵢⱼ* sets. From each pair *ij* of campaigns a new subset is defined: *Tᵢⱼ.* If the minimum number campaign pairs has been analysed, the displacement time series can be computed by direct integration of the *Tᵢⱼ* pairs of estimated displacements. By contrast, if a redundant configuration is used, the displacement time series are estimated through a LS estimation procedure.

The redundant configuration offers the advantage of having a certain degree of controllability of the displacements. In particular, the LS estimation can be analysed in order to identify and isolate outliers in the input data, i.e. the *Tᵢⱼ* pairs of estimated displacements. This process can be iterative.

The final product is provided by the final LS solution: a set of *T* estimated displacement time series, defined in the object space, say in a cartographic or geographic coordinate reference system.

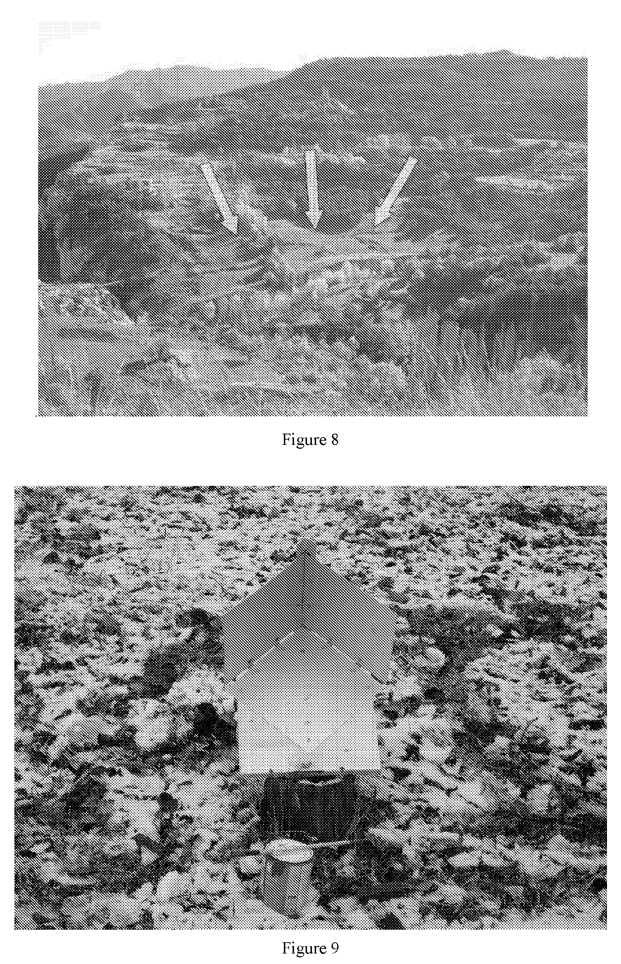

Figures 8 to 11 show a practical embodiment of the invention as applied to displacements associated with a landslide located in the Catalonian Pyrenees (Spain). The Aol is shown in figure 8. In the Aol were deployed 13 CRs a representative one of which is shown in figure 9. The GBSAR was located in a point that illuminated the whole Aol, with an average sensor-to-target distance of about 500 m. The data acquisition was performed twice: campaign_1 and campaign_2. In both campaigns multiple complex SAR images were acquired: 15 in the campaign_1 and 19 in the campaign_2.

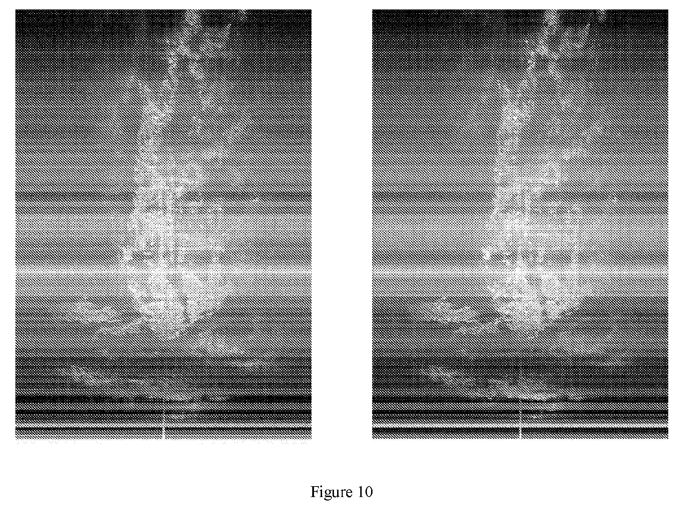

In the data pre-processing all acquired images showed to have good quality. By temporally filtering the two sets of complex SAR images obtained respectively obtained in campaign_1 and in campaign_2, two incoherent mean SAR images were derived, see Figure 10, in which the left image corresponds to campaign_1 and the right image to campaign_2.

A global matching step was then applied, which was followed by the estimation of the GBSAR-repositioning effects, and the estimation of the pairs of displacements. The results of these operations are summarized in the following table.

| **# CR** | **CR column [pixels]** | **CR linea [pixels]** | **Sensor-target distance [m]** | **Matching quality score** | **Displacement shift in range [pixel]** | **Displacements in range [cm]** |
|---|---|---|---|---|---|---|
| 1 | 216 | 2097 | 552 | 0.97 | 0.29 | -14.50 |
| 2 | 240 | 2137 | 532 | 0.97 | 0.29 | -14.50 |
| 3 | 247 | 2153 | 524 | 0.86 | 0.30 | -15.00 |
| 4 | 269 | 2108 | 546.5 | 0.89 | 0.38 | -19.00 |
| 5 | 251 | 2000 | 600.5 | 0.96 | 0.38 | -19.00 |
| 6 | 230 | 1962 | 619.5 | 0.89 | 0.16 | -8.00 |
| 7 | 277 | 2148 | 526.5 | 0.85 | 0.30 | -15.00 |
| 8 | 243 | 2236 | 482.5 | 0.98 | 0.33 | -16.50 |
| 9 | 200 | 2319 | 441 | 0.89 | 0.35 | -17.50 |
| 10 | 225 | 2235 | 483 | 0.93 | 0.24 | -12.00 |
| 11 | 210 | 2138 | 531.5 | 0.98 | 0.36 | -18.00 |
| 12 | 199 | 2185 | 508 | 0.91 | 0.47 | -23.50 |
| 13 | 188 | 2152 | 524.5 | 0.80 | 0.00 | 0.00 |

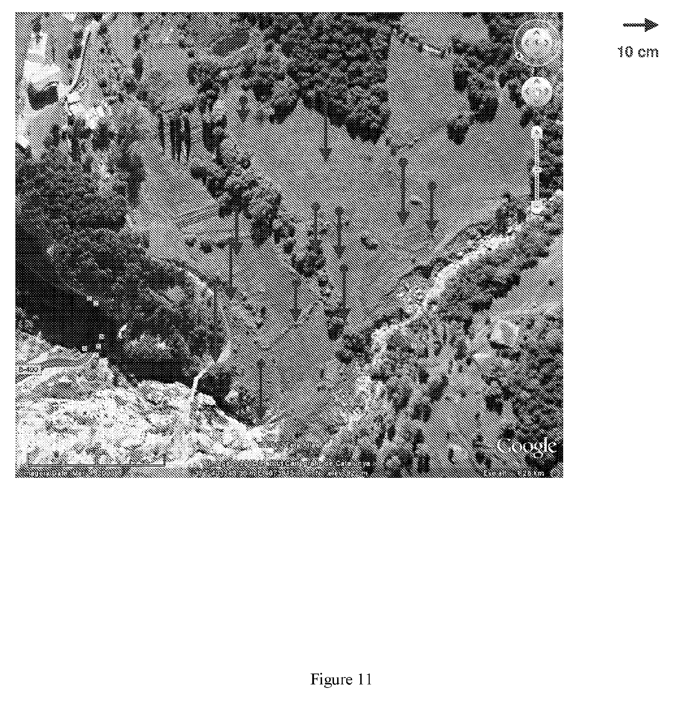

This table summarizes the main result of the analysis. For each CR are shown the position in the SAR image (column and line), the distance from the sensor, the quality score of the global matching, the displacement shift in the range direction in pixels, and the displacement in the range direction expressed in cm. The negative sign of the latter one conventionally indicates that between campaign_1 and campaign_2 the CR moved toward the sensor. As apparent, apart from the CR 13, which is located on a stable area, all other CRs show displacements in the range direction between 8 and 23.5 cm. A visualization of the displacements is shown in Figure 11.

An estimation of the displacement time series was not performed, due to the fact that only two data acquisition campaigns were made.

## Claims

1. A method for electronically monitoring terrain and man-made feature displacements using ground-based synthetic aperture radar data, the method comprising estimating displacements of targets located in an area of interest that have taken place between at least a first campaign and at least a subsequent campaign by means of a comparison of a first set of SAR image data acquired in the first campaign in the area of interest with a subsequent set of GBSAR image data acquired in the subsequent campaign in the area of interest, said SAR image data originating from complex SAR images respectively obtained in said campaigns by means of a GBSAR instrument placed in a position in accordance with sensor parameters comprising the position and the orientation of the GBSAR instrument and illuminating said area of interest and a plurality of targets present in said area of interest, the method comprises
subjecting a first set of quality-proofed complex SAR images originating from a first set of complex SAR images acquired in said first campaign, to data pre-processing by incoherent temporal averaging to obtain a first incoherent mean SAR image, and subjecting a second set of quality-proofed complex SAR images originating from a second set of complex SAR images acquired in said subsequent campaign, to data pre-processing by incoherent temporal averaging to obtain a second incoherent mean SAR image, whereby the first and second set of quality-proofed complex SAR images are obtained by subjecting each complex SAR image to a quality check and discarding images with problems;
selecting, in the first incoherent mean SAR image, first pixels which are representative of said targets in said first set of SAR image data acquired in the first campaign, and selecting, in the second incoherent mean SAR image, second pixels which are representative of said targets in said second set of SAR image data acquired in the second campaign, said targets being selected from artificial corner reflectors, if they are deployed, and natural reflectors in the area of interest;
performing a global image matching over the selected pixels to obtain a set of pairs of global shifts expressed in pixels and being representative of one image shift needed to match a given pixel of said first SAR image with a homologous pixel of said second SAR image, and selecting a plurality of quality-scored pairs of global shifts among the pairs of global shifts, by applying a matching score that measures the matching quality of the incoherent mean SAR images;
**characterised by** estimating GBSAR repositioning effects due to differences between the position and orientation of the GBSAR instrument in said first campaign and in said second campaign, by obtaining a mask comprising stable-area pixels corresponding to stable areas in the area of interest, computing a subset of global shifts falling in the mask, estimating a co-registration transformation of said subsets of global shifts, and producing a set of co-registration parameters modelling the GBSAR repositioning effects;
estimating pairs of displacements for said first and said subsequent campaign by subtracting the GBSAR repositioning effects modelled by the co-registration parameters from the set of pairs of global shifts, thereby obtaining a plurality of pairs of displacements shifts expressed in pixels which are relative displacements with respect to the whole of the stable-area pixels, converting the displacement shifts expressed in pixels into displacements expressed in a displacement unit, and obtaining a set of pairs of estimated displacements defined in an object space by geocoding, involving an image-to-object transformation.

2. A method according to claim 1, **characterized in that** the incoherent temporal averaging comprises subjecting each quality-proofed image to temporal filtering to enhance SAR amplitude images by reducing speckle effects.

3. A method according to claim 1 or 2, **characterized in that** said natural reflectors are selected from exposed rocks, man-made structures, metallic structures and combinations thereof.

4. A method according to any of claims 1-3, **characterized in that** said first pixels and said second pixels are selected by getting pixels having an amplitude value above a given threshold value.

5. A method according to any of claims 1-4, **characterized in that** global image matching is carried out on the amplitude of the selected pixels.

6. A method according to any of claims 1-5, **characterized in that** the matching score that measures the matching quality is a cross-relation coefficient or a sigma nought of least squares matching.

7. A method according to any of claims 1-6, **characterized in that** said mask comprising stable-area pixels is obtained by collecting external information on the stable areas in an object space, and mapping said external information in the SAR image space by taking into account said sensor parameters.

8. A method according to any of claims 1-6, **characterized in that** said mask comprising stable-area pixels is obtained by analysing said pairs of global shifts obtained after global imaging has been performed.

9. A method according to any of the preceding claims, **characterized in that** it comprises an estimation of a displacement time series by
obtaining a set of pairs of estimated displacements for each pair of campaigns to be analyzed, and identifying a common set of estimated displacements by carrying out an intersection of all set of estimated displacements, thereby obtaining a subset of estimated displacements for each pair of campaigns;
computing the displacement time series by direct integration of the subsets of estimated displacement and defining the displacement time series in an object space.

10. A method according to any of claims 1-8, **characterized in that** it comprises an estimation of a displacement time series by
obtaining a set of pairs of estimated displacements for each pair of campaigns to be analyzed, and identifying a common set of estimated displacements by carrying out an intersection of all set of estimated displacements, thereby obtaining a subset of estimated displacements for each pair of campaigns;
estimating the displacement time series by means of a least square estimation procedure, rejecting outliers in the subset of pairs of estimated displacements;
defining the displacement time series in an object space.

11. A method according to claim 10, **characterized in that** the estimation of the displacement time series is carried out iteratively.

## Patentansprüche

1. Verfahren zur Überwachung von Verschiebungen des Geländes und von durch Menschen geschaffenen Strukturen unter Verwendung der Daten eines bodengestützten Radars mit synthetischer Apertur, wobei das Verfahren das Schätzen von Verschiebungen von Zielen umfasst, die in einem Gebiet von Interesse befindlich sind und zwischen mindestens einer ersten Kampagne und mindestens einer nachfolgenden Kampagne stattgefunden haben, mittels eines Vergleichs von einem ersten Satz von SAR-Bilddaten, die in der ersten Kampagne in dem Gebiet von Interesse erfasst wurden mit einem nachfolgenden Satz von GBSAR-Bilddaten, die in der nachfolgenden Kampagne in dem Gebiet von Interesse erfasst wurden, wobei die SAR-Bilddaten aus komplexen SAR-Bildern stammen, die jeweils in den Kampagnen mittels eines GBSAR-Instruments erhalten wurden, das an einer Position entsprechend Sensorparametern positioniert wurde, umfassend die Position und die Ausrichtung des GBSAR-Instruments und die Beleuchtung des Gebiets von Interesse und einer Vielzahl von Zielen, die in dem Gebiet von Interesse vorhanden sind, wobei das Verfahren umfasst
Unterziehen eines ersten Satzes von qualitätsgesicherten komplexen SAR-Bildern, die aus einem ersten Satz von komplexen SAR-Bildern stammen, die in der ersten Kampagne erfasst wurden, der Daten-Vorverarbeitung durch inkohärentes temporales Mitteln zum Erhalten eines ersten inkohärenten mittleren SAR-Bildes, und Unterziehen eines zweiten Satzes von qualitätsgesicherten komplexen SAR-Bildern, die aus einem zweiten Satz von komplexen SAR-Bildern stammen, welche in der nachfolgenden Kampagne erfasst wurden, der Daten-Vorverarbeitung durch inkohärentes temporales Mitteln zum Erhalten eines zweiten inkohärenten mittleren SAR-Bildes, so dass der erste und zweite Satz aus qualitätsgesicherten komplexen SAR-Bildern durch Unterziehen der einzelnen komplexen SAR-Bilder einer Qualitätsprüfung und durch Entsorgen der Bilder mit Problemen erhalten werden;
Auswählen, in dem ersten inkohärenten mittleren SAR-Bild, von ersten Pixeln, welche die Ziele in dem ersten Satz aus SAR-Bilddaten repräsentieren, die in der ersten Kampagne erfasst wurden, und Auswählen, in dem zweiten inkohärenten mittleren SAR-Bild, von zweiten Pixeln, welche die Ziele in einem zweiten Satz aus SAR-Bilddaten repräsentieren, die in der zweiten Kampagne erfasst wurden, wobei die Ziele aus künstlichen Winkelreflektoren ausgewählt werden, wenn sie eingesetzt werden, und natürlichen Reflektoren in dem Gebiet von Interesse;
Durchführen eines globalen Bildabgleichs an den ausgewählten Pixeln, um einen Satz von Paaren von globalen Verschiebungen zu erhalten, die in Pixeln ausgedrückt sind und eine Bildverschiebung repräsentieren, die erforderlich ist, um ein bestimmtes Pixel des ersten SAR-Bildes mit einem homologen Pixel des zweiten SAR-Bildes abzugleichen, und Auswählen einer Vielzahl von mit einem Qualitätspunktwert versehenen Paaren von globalen Verschiebungen aus den Paaren von globalen Verschiebungen, durch Anwenden eines Übereinstimmungspunktwertes, welcher die Übereinstimmungsqualität der inkohärenten mittleren SAR-Bilder misst;
**gekennzeichnet durch**
Schätzen von GBSAR-Neupositionierungseffekten aufgrund von Differenzen zwischen der Position und Ausrichtung des GBSAR-Instruments in der ersten Kampagne und in der zweiten Kampagne, **durch** Abrufen einer Maske, die gebietsstabile Pixel entsprechend stabilen Gebieten in dem Gebiet von Interesse umfasst, Berechnen eines Teilsatzes von globalen Verschiebungen, die in die Maske fallen, Schätzen einer Co-Registrierungstransformation der Teilsätze von globalen Verschiebungen, und Erzeugen eines Satzes von Co-Registrierungsparametern zum Modellieren der GBSAR-Neupositionierungseffekte;
Schätzen von Paaren von Verschiebungen für die erste und die nachfolgende Kampagne **durch** Subtrahieren der GBSAR-Neupositionierungseffekte, die mittels der Co-Registrierungsparameter aus dem Satz von Paaren von globalen Verschiebungen modelliert wurden, wodurch eine Vielzahl von Paaren von Verschiebungen erhalten werden, die in Pixeln ausgedrückt sind, bei welchen es sich um relative Verschiebungen bezüglich der gesamten gebietsstabilen Pixel handelt, Umwandeln der in Pixeln ausgedrückten Verschiebungen in Verschiebungen, die in einer Verschiebungseinheit ausgedrückt werden, und Erhalten eines Satzes von Paaren von geschätzten Verschiebungen, die **durch** Geokodierung in einem Objektraum definiert sind, unter Einbeziehung einer Bild-zu-Objekt-Transformation.

2. Verfahren nach Anspruch 1, **dadurch gekennzeichnet, dass** das inkohärente temporale Mitteln das Unterziehen der einzelnen qualitätsgesicherten Bilder einer temporalen Filterung umfasst, um die SAR-Amplitudenbilder durch Reduzieren von Speckleeffekten zu verbessern.

3. Verfahren nach Anspruch 1 oder 2, **dadurch gekennzeichnet, dass** die natürlichen Reflektoren aus freiliegenden Felsen, von Menschen geschaffenen Strukturen, metallischen Strukturen und Kombinationen daraus gewählt werden.

4. Verfahren nach einem der Ansprüche 1 bis 3, **dadurch gekennzeichnet, dass** die ersten Pixel und die zweiten Pixel durch Erhalten von Pixeln ausgewählt werden, welche einen Amplitudenwert oberhalb eines gegebenen Schwellenwertes aufweisen.

5. Verfahren nach einem der Ansprüche 1 bis 4, **dadurch gekennzeichnet, dass** der globale Bildabgleich an der Amplitude der ausgewählten Pixel ausgeführt wird.

6. Verfahren nach einem der Ansprüche 1 bis 5, **dadurch gekennzeichnet, dass** der Übereinstimmungspunktwert, welcher die Übereinstimmungsqualität misst, ein Querbeziehungskoeffizient oder ein Sigma-Null aus der Fehlerquadratmethode ist.

7. Verfahren nach einem der Ansprüche 1 bis 6, **dadurch gekennzeichnet, dass** die Maske, welche die gebietsstabilen Pixel umfasst, durch Sammeln von externen Informationen über die stabilen Gebiete in einem Objektraum und durch Abgleichen der externen Informationen in dem SAR-Bildraum unter Berücksichtigung der Sensorparameter erhalten wird.

8. Verfahren nach einem der Ansprüche 1 bis 6, **dadurch gekennzeichnet, dass** die Maske, welche die gebietsstabilen Pixel umfasst, durch Analysieren der Paare von globalen Verschiebungen erhalten wird, welche erhalten werden, nachdem die globale Bildgebung durchgeführt wurde.

9. Verfahren nach einem der vorhergehenden Ansprüche, **dadurch gekennzeichnet, dass** es eine Schätzung einer Verschiebungszeitreihe umfasst durch
Erhalten eines Satzes von Paaren an geschätzten Verschiebungen für jedes Paar von zu analysierenden Kampagnen, und Identifizieren eines gemeinsamen Satzes von geschätzten Verschiebungen durch Ausführen eines Schnittes aller Sätze von geschätzten Verschiebungen, wodurch ein Teilsatz von geschätzten Verschiebungen für jedes Paar von Kampagnen erhalten wird;
Berechnen der Verschiebungszeitreihe durch direkte Integration der Teilsätze an geschätzten Verschiebungen und Definieren der Verschiebungszeitreihe in einem Objektraum.

10. Verfahren nach einem der Ansprüche 1 bis 8, **dadurch gekennzeichnet, dass** es eine Schätzung einer Verschiebungszeitreihe umfasst durch
Erhalten eines Satzes von Paaren an geschätzten Verschiebungen für jedes Paar von zu analysierenden Kampagnen, und Identifizieren eines gemeinsamen Satzes von geschätzten Verschiebungen durch Ausführen eines Schnittes aller Sätze von geschätzten Verschiebungen, so dass ein Teilsatz an geschätzten Verschiebungen für jedes Paar von Kampagnen erhalten wird;
Schätzen der Verschiebungszeitreihe mithilfe eines Fehlerquadrat-Schätzungsverfahrens, Ablehnen von Ausreißern in dem Teilsatz von Paaren von geschätzten Verschiebungen;
Definieren der Verschiebungszeitreihe in einem Objektraum.

11. Verfahren nach Anspruch 10, **dadurch gekennzeichnet, dass** die Schätzung der Verschiebungszeitreihe iterativ ausgeführt wird.

## Revendications

1. Procédé pour surveiller électroniquement des déplacements de terrain et de caractéristiques artificielles en utilisant des données de radar terrestre à synthèse d'ouverture (GBSAR), le procédé comportant l'estimation de déplacements de cibles situées dans une zone présentant un intérêt qui ont eu lieu entre au moins une première campagne et au moins une campagne suivante au moyen d'une comparaison d'un premier ensemble de données d'images SAR acquises pendant la première campagne dans la zone d'intérêt avec un ensemble suivant de données d'images GBSAR acquises pendant la campagne suivante dans la zone d'intérêt, lesdites données d'images SAR provenant d'images SAR complexes respectivement obtenues pendant lesdites campagnes au moyen d'un instrument GBSAR placé dans une position en fonction de paramètres de capteur comportant la position et l'orientation de l'instrument GBSAR et l'éclairage de ladite zone d'intérêt et d'une pluralité de cibles présentes dans ladite zone d'intérêt, le procédé comporte les étapes consistant à :
soumettre un premier ensemble d'images SAR complexes de qualité vérifiée provenant d'un premier ensemble d'images SAR complexes acquises pendant ladite première campagne, à un prétraitement de données par un moyennage temporel incohérent pour obtenir une première image SAR moyenne incohérente, et soumettre un second ensemble d'images SAR complexes de qualité vérifiée provenant d'un second ensemble d'images SAR complexes acquises pendant ladite campagne suivante, à un prétraitement de données par moyennage temporel incohérent pour obtenir une seconde image SAR moyenne incohérente, en sorte que les premier et second ensembles d'images SAR complexes de qualité vérifiée sont obtenus en soumettant chaque image SAR complexe à un contrôle de qualité et en rejetant les images ayant des problèmes,
sélectionner, dans la première image SAR moyenne incohérente, des premiers pixels qui sont représentatifs desdites cibles dans ledit premier ensemble de données d'images SAR acquises pendant la première campagne, et sélectionner, dans la seconde image SAR moyenne incohérente, des seconds pixels qui sont représentatifs desdites cibles dans ledit second ensemble de d'images SAR acquises pendant la seconde campagne, lesdites cibles étant sélectionnées à partir de réflecteurs en trièdre artificiels, s'ils sont déployés, et de réflecteurs naturels dans la zone d'intérêt,
effectuer un appariement d'images global sur les pixels sélectionnés pour obtenir un ensemble de paires de décalages globaux exprimés en pixels et étant représentatifs d'un décalage d'image nécessaire pour faire correspondre un pixel donné de ladite première image SAR avec un pixel homologue de ladite seconde image SAR, et sélectionner une pluralité de paires de décalages globaux à qualité notée parmi les paires de décalages globaux, en appliquant un score d'appariement qui mesure la qualité d'appariement des images SAR moyennes incohérentes,
**caractérisé par** les étapes consistant à :
estimer des effets de repositionnement du GBSAR dus à des différences entre la position et l'orientation de l'instrument GBSAR pendant ladite première campagne et pendant ladite seconde campagne, en obtenant un masque comportant des pixels de zone stable correspondant à des zones stables dans la zone d'intérêt, calculer un sous-ensemble de décalages globaux tombant dans le masque, estimer une transformation de co-enregistrement desdits sous-ensembles de décalages globaux, et produire un ensemble de paramètres de co-enregistrement modélisant les effets de repositionnement du GBSAR,
estimer des paires de déplacements pour ladite première campagne et ladite campagne suivante en soustrayant les effets de repositionnement du GBSAR modélisés par les paramètres de co-enregistrement à partir de l'ensemble de paires de décalages globaux, en obtenant ainsi une pluralité de paires de variations de déplacement exprimées en pixels qui sont des déplacements relatifs par rapport à l'ensemble des pixels de zone stable, convertir les variations de déplacement exprimées en pixels en déplacements exprimés dans une unité de déplacement, et obtenir un ensemble de paires de déplacements estimés définis dans un espace-objet par géocodage, impliquant une transformation d'image à objet.

2. Procédé selon la revendication 1, **caractérisé en ce que** le moyennage temporel incohérent comporte l'étape consistant à soumettre chaque image de qualité vérifiée à un filtrage temporel pour améliorer des images d'amplitude SAR en réduisant les effets de granularité.

3. Procédé selon la revendication 1 ou 2, **caractérisé en ce que** lesdits réflecteurs naturels sont choisis parmi des roches exposées, des structures artificielles, des structures métalliques et des combinaisons de celles-ci.

4. Procédé selon l'une quelconque des revendications 1 à 3, **caractérisé en ce que** lesdits premiers pixels et lesdits seconds pixels sont choisis en prenant des pixels ayant une valeur d'amplitude supérieure à une valeur de seuil donnée.

5. Procédé selon l'une quelconque des revendications 1 à 4, **caractérisé en ce qu'**un appariement d'images global est exécuté sur l'amplitude des pixels sélectionnés.

6. Procédé selon l'une quelconque des revendications 1 à 5, **caractérisé en ce que** le score d'appariement qui mesure la qualité d'appariement est un coefficient d'intercorrélation ou un sigma zéro d'une correspondance par les moindres carrés.

7. Procédé selon l'une quelconque des revendications 1 à 6, **caractérisé en ce que** ledit masque comportant des pixels de zone stable est obtenu en collectant des informations externes sur les zones stables dans un espace-objet, et en faisant correspondre lesdites informations externes dans l'espace d'images SAR en tenant compte desdits paramètres de capteur.

8. Procédé selon l'une quelconque des revendications 1 à 6, **caractérisé en ce que** ledit masque comportant des pixels de zone stable est obtenu en analysant lesdites paires de décalages globaux obtenus après que l'imagerie globale ait été exécutée.

9. Procédé selon l'une quelconque des revendications précédentes, **caractérisé en ce qu'**il comporte une estimation d'une série chronologique de déplacements consistant à :
obtenir un ensemble de paires de déplacements estimés pour chaque paire de campagnes à analyser, et identifier un ensemble commun de déplacements estimés en exécutant une intersection de tous les ensembles de déplacements estimés, en obtenant ainsi un sous-ensemble de déplacements estimés pour chaque paire de campagnes,
calculer la série chronologique de déplacements par intégration directe des sous-ensembles de déplacements estimés et définir la série chronologique de déplacements dans un espace-objet.

10. Procédé selon l'une quelconque des revendications 1 à 8, caractérisé en qu'il comporte une estimation d'une série chronologique de déplacements consistant à:
obtenir un ensemble de paires de déplacements estimés pour chaque paire de campagnes à analyser, et identifier un ensemble commun de déplacements estimés en exécutant une intersection de tous les ensembles de déplacements estimés, en obtenant ainsi un sous-ensemble de déplacements estimés pour chaque paire de campagnes,
estimer la série chronologique de déplacements au moyen d'une procédure d'estimation par les moindres carrés, rejeter les valeurs aberrantes dans le sous-ensemble de paires de déplacements estimés,
définir la série chronologique de déplacements dans un espace-objet.

11. Procédé selon la revendication 10, **caractérisé en ce que** l'estimation de la série chronologique de déplacements est exécutée par itération.
